Europäisches Patentamt

European Patent Office

Office européen des brevets

(19)

(11) Numéro de publication: **0 198 989**
**A1**

(12) **DEMANDE DE BREVET EUROPEEN**

(21) Numéro de dépôt: **85450010.5**

(22) Date de dépôt: **22.04.85**

(51) Int. Cl.⁴: **A 01 K 80/00**

(43) Date de publication de la demande:
29.10.86 Bulletin 86/44

(84) Etats contractants désignés:
BE GB IT NL

(71) Demandeur: **Perche, Hervé**
**Lotissement Monsegu**
**F-64470 Tardets(FR)**

(72) Inventeur: **Perche, Hervé**
**Lotissement Monsegu**
**F-64470 Tardets(FR)**

(74) Mandataire: **Trolliet, Jean-Claude**
**Cabinet BURDIPAT 20, cours du Chapeau Rouge**
**F-33000 Bordeaux(FR)**

(54) **Machine pour le ramassage des huîtres.**

(57) L'invention concerne une machine permettant le ramassage des huîtres dispersées sur la surface des parcs à même le sol comportant un chassis (1) sur lequel sont fixés un moteur (2) et boîte de vitesse (3) deux montants (4) supports de chenilles (5) et en partie avant un cadre incliné (6) sur lequel sont maintenus les organes de ramassage constitués par deux disques souples (7) circulaires adjacents fixés chacun en leur centre sur un axe rotatif (8), les disques (7) étant placé au-dessus d'un peigne fixé incliné (11) destiné à soulever les huîtres enfoncées dans le sol et/ou réparties sur ce dernier durant le déplacement de la machine afin que lesdites huîtres soient happées durant la rotation des disques (7) par le renflement souple (10) et projetées à l'arrière, la rotation des axes (8) et l'avancement de la machine étant obtenu par courroie relié à la boîte de vitesse.

Fig.1

EP 0 198 989 A1

# MACHINE POUR LE RAMASSAGE DES HUITRES

La présente invention concerne une machine permettant le ramassage des huîtres dispersées sur la surface des parcs à même le sol.

On connaît le ramassage des huîtres dispersées sur la surface des parcs à même le sol effectué manuellement par fourche ainsi que par différentes machines généralement à usages multiples notamment celles décrites dans les brevets 1 564 741 et 1 585 254 comportant un chassis sur lequel s'adapte le dispositif de ramassage constitué par des doigts et/ou auges disposées parallèlement et réparti sur des traverses reliant au moins deux chaînes parallèles et/ou sur un tapis sans fin se déplaçant entre deux pignons ou tambours dont un est moteur afin de provoquer le déplacement desdites chaînes et/ou tapis et assurer le ramassage des huîtres lors du passage des doigts et/ou auges par grattage du sol. Ces machines ont pour inconvénient un prix de revient élevé, sont d'un encombrement important et peu maniables.

La machine objet de l'invention a pour but de remédier aux inconvénients précédemment exposés.

L'invention a pour objet une machine de ramassage d'huîtres comportant un chassis supporté par des éléments de déplacement tel que chenilles, sur le chassis est fixé l'organe moteur relié aux éléments de déplacement et organes de ramassage placés à l'avant dudit chassis constitué par deux disques rotatifs adjacents en matière souple présentant un renflement en forme d'étoile en leur partie supérieure de telle sorte que durant le déplacement du chassis, les huîtres soulevées du sol par un peigne fixe placé sous les disques, sont happées lors de la rotation des disques en sens contraire de manière convergente vers l'entre axe desdits disques, par les renflements en étoile et projetées à l'arrière où elles sont récupérées dans un panier.

-2

D'autres caractéristiques et avantages de l'invention ressortiront plus clairement de la description qui va suivre faite en regard des dessins joints donnés à titre d'exemple non limitatif, où :

- la figure 1 est une vue de côté de la machine,
- la figure 2, une vue de dessus au niveau des éléments de ramassage.
- la figure 3, une vue de face des éléments de ramassage.

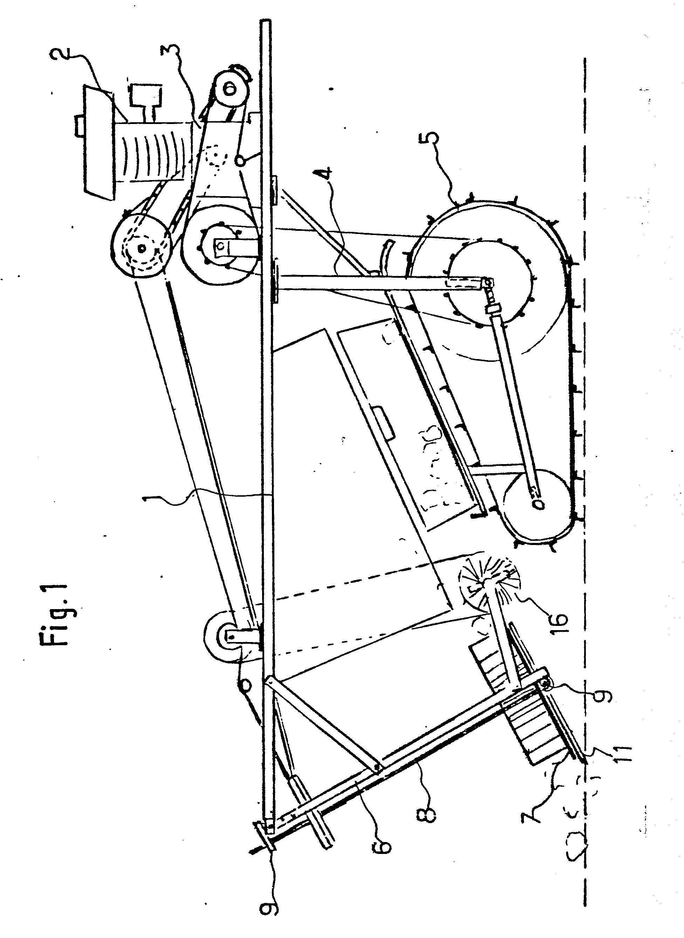

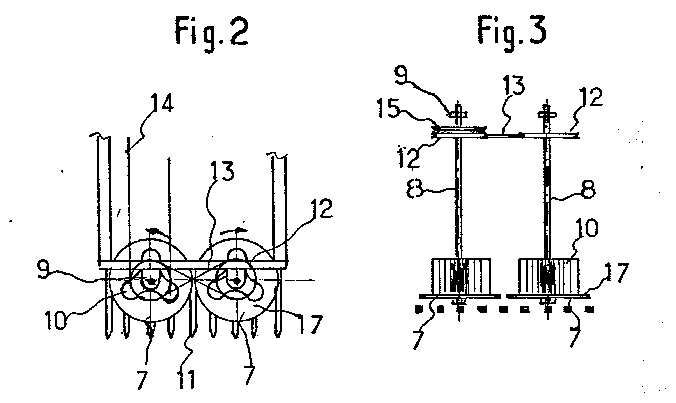

Tel que représenté figures 1 à 3, la machine comporte un chassis 1 sur lequel sont fixés un moteur 2 et une boîte de vitesse 3, deux montants 4 supports de chenilles 5 et en partie avant un cadre incliné 6 sur lequel sont maintenus les organes de ramassage constitués par deux disques souples 7 circulaires adjacents fixés chacun en leur centre sur un axe rotatif 8, ledit axe 8 étant maintenu au moyen de paliers 9 sur le cadre incliné 6, la face supérieure 17 des disques souples 7 est prolongée par un renflement souple 10 en forme d'étoile. En partie supérieure des axes rotatifs 8 est fixée sur chacun d'eux une poulie 12 permettant de recevoir une courroie 13, celle-ci est croisée en son centre afin d'engendrer une rotation des disques 7 en sens inverse de manière convergente vers l'entre axe desdits disques, l'entraînement en rotation des disques 7 est obtenu par tous moyens appropriés reliés à la boîte de vitesse 3, tel que par exemple une courroie 14 en appui sur la poulie 15 fixée sur un des axes 8.

Les disques souples 7 sont maintenus au-dessus d'un peigne incliné 11 destiné à soulever les huîtres enfouies dans le sol et/ou réparties sur ce dernier durant le déplacement de la machine, de telle sorte que les huîtres soulevées par le peigne 11 sont happées durant la rotation des disques par le renflement souple 10 en étoile et projetées à l'arrière dans un panier de récupération.

De sorte à débarrasser les huîtres d'une partie des souillures qu'elles comportent sur leur coquille, durant leur projection ces dernières sont mises en contact avec une brosse 16 rotative entraînée par courroie et poulie par exemple.

Il va de soi que la machine et notamment les éléments de ramassage ne sont pas limités en utilisation au ramassage des huîtres, ils peuvent être avantageusement utilisés pour le ramassage de coquillages par exemple et/ou de manière générale pour tous corps solides reposant sur le sol.

# REVENDICATIONS

1°) Machine pour le ramassage des huîtres comportant un chassis (1) supporté par des éléments de déplacement tel que chenilles (5) sur ledit chassis (1) sont fixés les organes moteurs (2 et 3) reliés aux éléments de déplacement (5) et organes de ramassage (7) placés à l'avant du chassis, caractérisée par les organes de ramassage constitués par deux disques circulaires souples (7) adjacents fixés en leur centre sur un axe rotatif (8) maintenu sur un cadre incliné (6), les disques (7) présentant sur leur face supérieure un renflement souple (10) de telle sorte que durant le déplacement du chassis les huîtres soulevées par un peigne incliné fixe (11) sont happées lors de la rotation des disques (7) par le renflement et projetées à l'arrière où elles sont récupérées dans un panier.

2°) Machine pour le ramassage des huîtres selon la revendication 1 caractérisée par le renflement souple (10) en partie supérieure des disques (7) en forme d'étoile.

3°) Machine pour le ramassage des huîtres selon la revendication 1 caractérisée par la rotation des disques (7) en sens contraire de manière convergente vers l'entre axe desdits disques (7).

Fig.1

## Fig.2

## Fig.3

**Office européen des brevets**

# RAPPORT DE RECHERCHE EUROPEENNE

Ð198989

Numero de la demande

EP 85 45 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-3 057 104 (E. CONSTANTOPES) | | A 01 K 80/00 |
| A | GB-A-1 405 674 (IRISH COCKLES EXPORT CO. LTD.) | | |
| D,A | FR-A-1 585 254 (M. JAMBON) | | |
| D,A | FR-A-1 564 741 (J. FOULFOIN) | | |

| | DOMAINES TECHNIQUES RECHERCHES (Int. Cl.4) |
|---|---|
| | A 01 K |

Le présent rapport de recherche a été établi pour toutes les revendications

| Lieu de la recherche | Date d'achèvement de la recherche | Examinateur |
|---|---|---|
| LA HAYE | 21-08-1985 | NEHRDICH H.J |